# EUROPEAN PATENT SPECIFICATION

(11) **EP 4 293 384 B1**
(45) Date of publication and mention of the grant of the patent: **30.09.2026**
(21) Application number: 22209575.4
(22) Date of filing: 25.11.2022
(51) Int. Cl.: G01S 7/481, G01S 7/4865, G01S 17/26, G01S 17/42, G01S 17/58, G01S 17/89, G01S 7/499

(54) **HIGH-SPEED TIME-OF-INTERFERENCE LIGHT DETECTION AND RANGING APPARATUS**
HOCHGESCHWINDIGKEITS-INTERFERENZZEITLICHTDETEKTIONS- UND -ENTFERNUNGSMESSVORRICHTUNG
APPAREIL DE DÉTECTION ET DE TÉLÉMÉTRIE DE LUMIÈRE À TEMPS D'INTERFÉRENCE À GRANDE VITESSE

(30) Priority: 30.03.2022 US 202217708728
(43) Date of publication of application: 20.12.2023
(73) Proprietor: Optowaves, Inc., San Jose, CA 95119 (US)
(72) Inventor: TSUNG-HAN, TSAI, Newton MA (US); JIE JENSEN, HOU, El Dorado Hills CA (US); HAO, WU, Wuhan (CN); SHANXING, SU, Wuhan (CN)
(74) Representative: Schuffenecker, Thierry

(56) References cited:
- US-A1- 2007 024 842
- US-A1- 2021 055 391

## Description

### Technical Field

This disclosure relates generally to light detection and ranging systems. More particularly, this disclosure relates to light detection and ranging systems that utilize optical interferometry devices and methods to measure distance and speed.

### Background Art

Light detection and ranging (LiDAR) is analogous to radio detection and ranging (Radar) in that LiDAR uses optical waves to determine the range, angle, and velocity of objects. LiDAR utilizes differences in laser light return times and wavelengths that can be used to make digital 3-D representations of the target and has been broadly used in terrestrial, airborne, and mobile applications. A LiDAR instrument consists of one or more laser emitters, optics, a scanner, a photodetector, and a signal processor. The one or more laser emitters generate a coherent light beam transferred through a set of optics to a scanner to be transmitted to an object for determining the distance to the object or the object's velocity. In the case of three-dimensional (3D) scanning, the physical features are determined. The photodetector receives the coherent light reflected from the object and converts the coherent light to electrical signals that are processed to determine the object's distance. The emitter will generate the coherent light as pulses. The signal processor records the time of the transmitted pulse, and the time of the reception of the reflection of the coherent light is recorded. The distance is the difference between the transmitted time and the received time divided by two and multiplied by the speed of light.

Amplitude modulation continuous wave (AMCW) LiDAR is a phase-based form of LiDAR. Unlike direct pulse detection, the phase-based LiDAR emits a continuous laser signal. It modulates the laser emission amplitude with a high-speed radiofrequency (RF) signal to encode the output optical signal. The phase difference between the emitted signal and the reflected signal is detected for ranging. The phase shift of a sinusoidally-modulated continuous laser waveform can be used to infer the distance to an object.

Frequency modulated continuous wave (FMCW) LiDAR is similar to AMCW LiDAR, but the modulation and demodulation are performed optically rather than electrically. FMCW LiDAR uses a wavelength-tuning light source or a phase-modulating light source and an interferometer to measure the object's distance with good sensitivity. "Comb-Calibrated Frequency-Modulated Continuous-wave LiDAR, "Y. Xie et al., 2020 IEEE 7th International Workshop on Metrology for AeroSpace (MetroAeroSpace), Pisa, Italy, 2020, pp. 372-376, Found 2/15/2021 at URL: https://ieeexplore.ieee.org/stamp/stamp.jsp? tp=&arnumber= 9160234&isnumber=9159966 describes FMCW LiDAR as very suitable for absolute distance measurement. The FMCW laser's frequency is linearly modulated by a carrier signal to accurately measure the laser round-trip flight time. The flight time can be calculated with high precision by detecting the beat frequency signal between the returned laser and the emitted laser. High-precision distance measurement can be achieved.

Time-of-interference (TOI) LiDAR technology is a new ranging method that overcomes limitations of traditional LiDAR techniques, including time-of-flight (ToF) and frequency-modulated continuous-wave (FWCW) with the following features: (1) utilization of an interferometer with balanced detector allowing highly sensitive detection of weak interference signals from long range; (2) time delay of the interference signal can be measured even when the signal frequency is high, and thus provides accurate measurement of the distance from the object, eliminating the need of high-speed data acquisition systems; (3) phase- or wavelength-modulation requirement of the light source is low and thus can simplify the complexity of the driver circuit design for the light source. The operating speed of TOI LiDAR systems is mainly limited by the modulation speed of the light source and the efficiency of the optical receiver.

US Patent Application 2021/0055391 A1, LaChapelle,Joseph G., ET AL),Filed 26 June, 2020 describes a lidar system includes a light source configured to emit local-oscillator light and pulses of light, where each emitted pulse of light is (i) coherent with a corresponding portion of the local-oscillator light and (ii) includes a spectral signature of one or more different spectral signatures. The lidar system also includes a receiver configured to detect the local-oscillator light and a received pulse of light, the received pulse of light including light from one of the emitted pulses of light scattered by a target located a distance from the lidar system, the one of the emitted pulses of light including a particular spectral signature of the one or more spectral signatures. The local-oscillator light and the received pulse of light are coherently mixed together at the receiver. The receiver includes one or more detectors and a frequency-detection circuit.

US Patent Application US 2007/024842A1 (Norihiko Nishizawa, ET AL), Filed 21 March, 2006 describes a distance measurement device with a light divider that separates pulsed light emitted from an ultrashort pulse fiber laser into a reference light and a signal light. A scanning mirror unit irradiates an object with the signal light as a division of the pulsed light and receives scattered light B, which is reflected from the object irradiated with the signal light. An optical path length adjustment unit adjusts an optical path length of the reference light A as a division of the pulsed light. A differential detector included in an interference signal generator detects the degree of interference of the reference light A having the adjusted optical path length with the scattered light B and outputs the detected degree of interference as an interference signal. A computer specifies an adjustment value set in the optical path length adjustment unit to attain a specific optical path length maximizing the interference signal and uses the specified adjustment value to compute a distance from a reference position of the scanning mirror unit to the object. The distance measurement device of the invention thus enables high-speed and highly-accurate measurement of the object.

### Summary of the invention

An object of this disclosure is to provide a high-speed time-of-interference (TOI) light detection and ranging (LiDAR) system that is based on time-frequency domain reflectometry and a small wavelength transient-modulation of the coherent light source. The high-speed TOI LiDAR system uses a time-to-digital converter or a data acquisition system to record the time delay of an interference signal or time-of-interference (TOI). The output wavelength is determined by the operating current or operating temperature of the coherent light source.

To accomplish this object, a high-speed TOI LiDAR system has a coherent light source connected to a modulating controller as defined in claim 1. The modulating controller is configured to generate a pulsed wavelength control signal that is transferred to the coherent light source. The pulsed wavelength control signal may be a *current* modulation signal or a laser ambient temperature adjustment signal. The pulsed wavelength control signal modulates the coherent light source to generate a pulsed wavelength-modulated coherent light emission.

The pulsed wavelength-modulated coherent light emission is an input to an interferometer. The interferometer is configured for partitioning the pulsed wavelength-modulated coherent light emission into a sampling portion and a reference portion. The pulsed wavelength-modulated coherent light emission's sampling portion is arranged to impinge upon an object to be measured. The reference portion of the pulsed wavelength-modulated coherent light emission is arranged to provide a reference basis for determining the distance from the TOI LiDAR system to the object. The interferometer further is configured for transferring the pulsed wavelength-modulated coherent light to a scanner. The scanner is configured to physically transfer the pulsed wavelength-modulated coherent light's first portion to the object and scan the object's surface with the pulsed wavelength-modulated coherent light. The scanner is further configured to receive a portion of the pulsed wavelength-modulated coherent light back-reflected from the object. The back-reflected pulsed wavelength-modulated coherent light is transferred from the scanner to the interferometer and then coupled with the reference portion of the pulsed wavelength-modulated coherent light to form an optical interference light signal.

The TOI LiDAR system has a photodetector array configured to convert the optical interference signal to an electrical interference signal. In various embodiments, the photodetector is configured as a polarization-diversity balanced amplified detector. The photodetector has at least one power monitor to measure the input power level to the photodetector. The power monitor output provides a modulated power level with a time delay associated with the object's distance.

The TOI LiDAR system has a signal processor configured to receive the electrical interference signal and convert the electrical interference signal to digital data representing the electrical interference signal amplitude as the digital data. The signal processor is configured to generate a displayed imaging range based on the distance from the target. The displayed imaging range is calculated by a computer system programmed to calculate the time delay determined by the optical interference signal.

The modulating controller is configured to generate a wavelength modulation control signal with a low duty cycle to modulate the coherent light source by controlling the narrow coherent light source's driving current, the temperature of the narrow bandwidth light source, or adjusting the phase of the light emitted from the light source. In other embodiments, the modulating controller will generate a pulsed phase control signal for generating interference when there is a time delay between light in the sample and reference arms of the interferometer.

In various embodiments, the interferometer includes a polarization controller used to adjust the polarization states of the coherent light emission from the light source and maximize the amplitude of the optical interference signal or electrical interference signal. The interferometer has a first coupler that receives the pulsed wavelength-modulated coherent light from the polarization controller. The coupler divides the pulsed wavelength-modulated coherent light. A first portion of the pulsed wavelength-modulated coherent light is fed into at least one sample arm. A second portion of the pulsed wavelength-modulated coherent light is fed to a reference arm. The interferometer has a circulator connected to receive the first portion of the pulsed wavelength-modulated coherent light from the at least one sample arm. The circulator is configured such that the pulsed wavelength-modulated coherent light from the sample arm enters the circulator and exits from the next port. Generally, the next port is a clockwise direction to direct the pulsed wavelength-modulated coherent light to the scanner. The scanner is configured to physically transfer the sample pulsed wavelength-modulated coherent light to scan the objects. The sampled pulsed wavelength-modulated coherent light is back-reflected from the object for making ranging measurements to the scanner and transferred to the circulator within the interferometer. The back-reflected pulsed wavelength-modulated coherent light is then transmitted from the circulator to a second coupler.

The interferometer's reference arm has a length greater than two times the sampling arm's length. The second portion of the pulsed wavelength-modulated coherent light in the reference arm is applied to the second coupler. The second portion of the pulsed wavelength-modulated coherent light transported in the reference arm is coupled with the collected back-reflected pulsed wavelength-modulated light to form an optical interference light signal. The optical interference light signal exits the second coupler to enter a photodetector array.

The reference arm's optical path length is longer than the sample arm's optical path length by more than two times the system's maximum ranging depth. The maximum frequency of the optical interference signal corresponds to the minimum ranging depth of the system.

The maximum frequency of the optical interference signal corresponds to the minimum ranging depth of the TOI LiDAR system. It is greater than a Nyquist sampling frequency of the digitizer in the data acquisition and signal processor. The minimum frequency of the optical interference signal corresponds to the maximum ranging depth of the TOI LiDAR system. The time delay of the detected optical interference is measured at the falling edge of the optical interference signal's envelope.

### Brief Description of the Drawings

Figs. 1A, 1B, 1C are schematic drawings of a TOI LiDAR System embodying the principles of the present disclosure.
Fig. 1D is a schematic drawing of a scanner receiving graded-index lens of an end of the sampling arm of Figs. 1A, 1B, and 1C embodying the principles of the present disclosure.
Figs. 2A is a block diagram of an electrical TOI measurement circuit embodying the principles of the present disclosure.
Fig. 2B is a block diagram of a program structure of a signal processor configured for performing an electrical TOI measurement embodying the principles of the present disclosure.
Fig. 2C is a plot of the sample arm's back-reflected pulse fringe at zero (0) meter location and envelope embodying the principles of the present disclosure.
Fig. 2D is a plot of the sample arm's back-reflected pulse fringe at 180 meter location and envelope embodying the principles of the present disclosure.
Fig. 3 illustrates the frame-based velocity measurement method of the TOI LiDAR system embodying the principles of the present disclosure.
Fig. 4A is a block diagram of a transient light source modulator embodying the principles of this disclosure.
Fig. 4B is a schematic of the transient light source modulator and a coherent light source embodying the principles of the present disclosure.
Fig. 5A is a block diagram of an SSM-TOI electrical measurement circuit embodying the principles of the present disclosure.
Fig. 5B is a block diagram of a program structure of a signal processor configured for performing an SSM-TOI electrical measurement embodying the principles of the present disclosure.
Fig. 6 is a block diagram of a digital signal processor configured for performing an SSM-TOI Doppler velocity measurement embodying the principles of the present disclosure.
Fig. 7 is a block diagram of an integrated TOI and Time-of-Flight circuit embodying the principles of the present disclosure.
Fig. 8A is a flowchart of a method for determining an object's distance employing SSM-TOI electrical measurement embodying the principles of the present disclosure.
Fig. 8B is a flowchart of a method for determining an object's velocity employing SSM-TOI electrical measurement embodying the principles of the present disclosure.

### Detailed Description

A TOI LiDAR System is configured to generate an image of an object based on the distance of various point measurements to the object. The TOI LiDAR System detects the envelope of an electrical signal created from an interference light signal. The interference light signal is produced from the back-reflected light resulting from a sampling arm light emission to the object and a reference light emission. The reference light emission is created by splitting a pulsed wavelength-modulated coherent light source's emission signal and passing the reference light emission through a reference arm. The optical interference signal is transferred to a photodetector for conversion to an electrical signal that is converted to digital data that is evaluated to determine falling edges of the reference light emission and the back-reflected light to determine a time delay between the reference light emission and back-reflected light. From the time delay, the distance is then calculated.

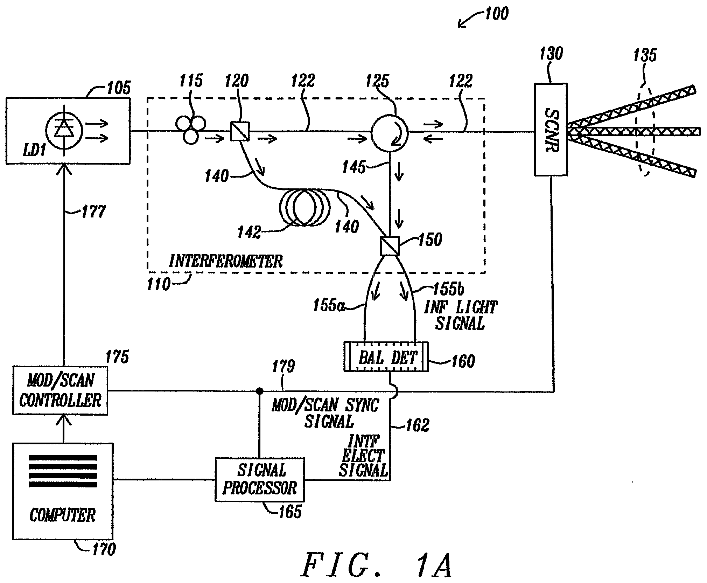

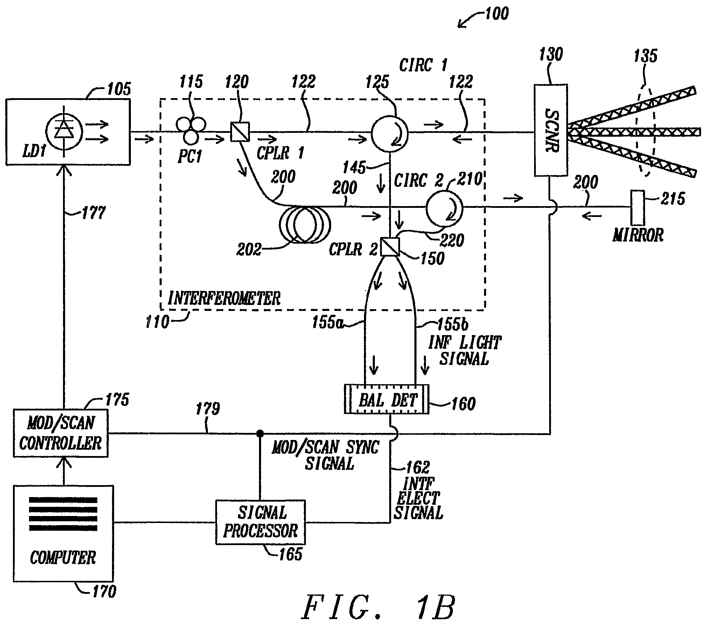

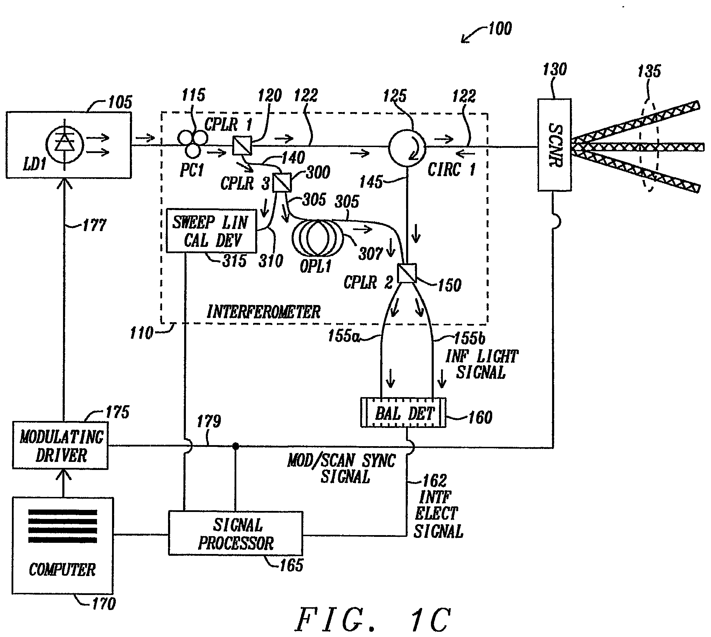

Figs. 1A, 1B, 1C are schematic drawings of a TOI LiDAR System embodying the principles of the present disclosure. Referring to Fig. 1A, a TOI LiDAR system **100** includes a pulsed wavelength-modulated narrow bandwidth light source **105.** The pulsed wavelength-modulated light source **105** emits a pulse modulated coherent light having an output spectrum composed of single or multiple longitudinal modes. A longitudinal mode of a resonant cavity is a particular standing wave pattern formed by waves confined in the cavity. In a laser, the light is amplified in a cavity resonator, usually composed of two or more mirrors. The cavity has mirrored walls that reflect the light to allow standing wave modes to exist in the cavity with little loss. The longitudinal modes correspond to the reflecting waves' wavelengths reinforced by constructive interference after many reflections from the cavity's reflecting surfaces. All other wavelengths are suppressed by destructive interference. A longitudinal mode pattern has its nodes located axially along the length of the cavity. The pulsed wavelength-modulated light source **105** is implemented as one of four types of lasers known in the art and categorized as a solid-state laser, a gas laser, a liquid laser, or a semiconductor laser. In the discussion of the structure of this disclosure, the pulsed wavelength-modulated light source **105** is shown as a coherent light source **105** with its wavelength or frequency controlled by either current or temperature. The modulation of the pulsed wavelength-modulated light source **105** is described hereinafter.

The pulsed wavelength-modulated narrow band light source **105** emits the pulsed wavelength-modulated coherent light to an interferometer **110.** The pulsed wavelength-modulated narrow bandwidth light source **105** emissions are through free-space, an optical fiber, or an optical waveguide to the interferometer **110**

The interferometer **110,** in various embodiments, is implemented as fiber optics, bulk optics, integrated photonic circuitry, or some combinations thereof. The interferometer **110** has a polarization controller **115** that receives the pulsed wavelength-modulated coherent light. The polarization controller **115** adjusts the polarization states of the pulsed wavelength-modulated coherent light from the light source **105.** It maximizes the amplitude of the optical interference signals transferred in the optical paths **155a** and **155b** or interference electrical signal **162.** The pulsed wavelength-modulated coherent light from the light source **105** or the pulsed wavelength-modulated coherent light transferred through the polarization controller **115** is applied a coupler **120.** The coupler **120** divides the coherent light into a sample portion fed into at least one sample arm **122** and a reference portion of the pulsed wavelength-modulated coherent light fed into a reference arm **140** within the interferometer **110.** The sample arm **122** and the reference arm **140** are implemented as a free-space path, an optical fiber, or an optical waveguide.

The interferometer **119** has a circulator **125** that receives the sample portion of the pulsed wavelength-modulated coherent light from the sample arm **122.** The circulator **125** is configured such that the sample portion of the pulsed wavelength-modulated coherent light enters the circulator **125** and exits from the next port to a section of the sample arm **122.** The next port is generally, but not required, in a clockwise direction to direct the coherent light through the sample arm **122** to a scanner **130.** The scanner **130** is configured to physically transfer the sample pulsed wavelength-modulated coherent light **135** to scan the object. The sampled pulsed wavelength-modulated coherent light **135** is back-reflected from the object for making the ranging measurements. The back-reflected pulsed wavelength-modulated coherent light is received by the scanner **130** and transferred to the circulator **125.** The back-reflected pulsed wavelength-modulated coherent light through the optical path **145** is then transferred to a second coupler **150.** The optical path is implemented as a free-space path, an optical fiber, or an optical waveguide.

The reference arm **140,** as implemented as a free-space path, an optical fiber, or an optical waveguide, has additional optical path **142** that provides additional path length such that the reference arm's **140** path length matches the maximum ranging depth of the TOI LiDAR system **100.** The optical pulsed wavelength-modulated coherent light signals from the at least one sample arm **122** and the reference arm **140** are combined in the coupler **150** to generate an optical interference signal.

The pulsed wavelength-modulated coherent light signals from the at least one sample arm **122** and the reference arm **140** are heterodyne detected to extract the beating frequency from the base signal. The beating signal has a 180° phase difference in the two outputs from the coupler. The balanced detector **160** subtracts the signal from each input channel to extract the interference signal that is the beating signal.

The optical interference signal is applied to the optical paths **155a** and **155b** implemented as a free-space path, an optical fiber, or an optical waveguide. The optical interference signal is applied to the optical paths **155a** and **155b** is transferred to a balanced photodetector **160** to convert the optical interference signal from the optical paths **155a** and **155b** into an interference electrical signal **162.**

The interference electrical signal **162** is generated by the balanced photodetector **160** and transferred to a data acquisition circuit within a signal processor **165,** where the interference electrical signal **162** is converted into digital data. The maximum frequency of the optical interference signal corresponds to the minimum ranging depth of the TOI LiDAR system. The optical interference signal's maximum frequency is greater than a Nyquist sampling frequency of the digitizer in the data acquisition or the signal processor **165.**

The minimum frequency of the optical interference signal as applied to optical paths **155a** and **155b** corresponds to the maximum ranging depth of the TOI LiDAR system **100.** The time delay of the detected optical interference is measured at the falling edge of the optical interference signal's envelope.

The digital data is then transmitted to a computer **170** for further processing and display. The signal processor **165** in some embodiments may be integrated with the computer **170** as a single unit.

In various embodiments, the computer **170** is connected to a modulation/scanning controller **175.** In other embodiments, the computer **170** is integrated with the modulation/scanning controller **175.** The modulation/scanning controller **175** has a modulation subcircuit that determines the modulation, frequency, and shape of the modulation control signal **177** applied to the coherent light source **105.** The modulation/scanning controller **175** further has a scanning control circuit that provides a modulation/scan synchronization signal **179** to the signal processor **165** and the scanner **130.** The scanning control circuit creates a desired scan pattern that is used to generate appropriate modulation/scan synchronization signal **179** that is applied to the scanner **130**

The scanner **130** may be implemented as a 1-dimensional or 2-dimensional scanner to distribute the sample pulsed wavelength-modulated coherent light **135** to form an image based on the TOI measurement. The 1-dimensional scanning pattern may be linear or non-linear in time and may be unidirectional or bidirectional. In some implementations of the TOI LiDAR system **100,** the 2-dimensional scanning pattern may be linear or non-linear in time. It may be in the form of a raster scan, spiral scan, or other patterns to collect the measurement information. The scanner **130** may be realized mechanically as galvanometer mirrors, micro-electro-mechanical systems (MEMS), piezo actuators, optically including acousto-optic (AO) deflector, or a solid-state scanner. There may be other methods in keeping with the principles of the present disclosure of providing the required scanning motion to collect the measurement information.

Referring to Fig. 1B, the TOI LiDAR system **100** has the same structure as Fig. 1A, but the second portion of pulsed wavelength-modulated coherent light is applied to the reference arm **200.** The fiberoptic cable of reference arm **200,** as implemented as a free-space path, an optical fiber, or an optical waveguide, has an additional optical path **142** such that the reference arm's **200** optical path length matches the maximum ranging depth of the TOI LiDAR system **100.** The pulsed wavelength-modulated coherent light in the reference arm **200** is applied to an input port of a second circulator **210.** The pulsed wavelength-modulated coherent light is transmitted out the input/output port of the second circulator **210** to an additional segment of the reference arm **200.** The coherent light impinges upon a mirror **215.** The mirror **215** provides a delay in the coherent light and, in some embodiments, is replaced with an optical delay line. The mirror **215** directly reflects the coherent light back to the second circulator **210** and is directed to the coupler **150.** The mirror reflected coherent light is coupled with the back-reflected pulsed wavelength-modulated coherent light to form the optical interference signal. The mirror **215** serves as a reference image plane corresponding to the maximum range of the TOI LiDAR system **100.** The mirror **215** permits additional path length **202** to be half of the length if it is located between the second circulator **210** and the mirror **215** due to the double pass of the light. The mirror **215** permits cost savings and space savings.

The replacement of the mirror **215** with an optical delay line increases the flexibility of fine-tuning the total reference arm path length. The tunable range of the delay is typically in the order of centimeters, so it is mainly to accommodate the small change of system variation rather than changing the overall imaging range.

The optical interference signal is applied to the optical paths **155a** and **155b** implemented as a free-space path, an optical fiber, or an optical waveguide. The optical interference signal as applied to the optical paths **155a** and **155b** is transferred to a balanced photodetector **160** to convert the optical interference signal from the optical paths **155a** and **155b** into an interference electrical signal **162** as described above.

In some implementations, the reference arm **140** of Fig. 1A and **200** of Fig. 1B may have a longer optical path length than the sample arm 103. The timing of the interference of the pulsed wavelength-modulated coherent light signals from the sampling arm **122** and reference arm **140** and **200** is at the falling edge of the interference envelope. In various embodiments, the reference arm **140** and **200** may have a shorter optical path length than the sample arm **122.** The timing of the interference of the pulsed wavelength-modulated coherent light signals from the sampling arm **122** and reference arm **140** and **200** is at the rising edge of the interference envelope.

Referring to Fig. 1C, the TOI LiDAR system **100** has the same structure as Fig. 1A, but the second portion of the pulsed wavelength-modulated coherent light of the reference arm **140** leaves the first coupler **120** enters a third coupler **300.** The reference arm **140** is implemented as a free-space path, an optical fiber, or an optical waveguide. The third coupler **300** further divides the second portion of the pulsed wavelength-modulated coherent light into two pulsed wavelength-modulated coherent light beams. A first fraction of the second portion of the pulsed wavelength-modulated coherent light beams is applied to a second reference arm **305** that is similarly implemented as a free-space path, an optical fiber, or an optical waveguide. The second fraction of the second portion of the pulsed wavelength-modulated coherent light beam of the second reference arm **305** is applied to a sweep linear calibration device **315.**

The sweep linear calibration device **315** is a Mach-Zehnder interferometer or a Fabry-Perot filter that generates an electrical signal to calibrate the coherent light source's **105** linearity of the wavelength sweep. If the wavelength modulation is not linear in the optical frequency domain, sweep linear calibration device **315** generates an interference signal from a fixed pathlength difference from either the Mach-Zehnder interferometer or a Fabry-Perot filter. It typically involves a photodetector or balanced detector to generate an electrical signal. Its zero-crossing timing corresponds to equal spaces in the optical frequency domain and provides an optical clock for the data acquisition system within the signal processor **165.** The sweep linear calibration device **315** calibrates the interference signal **162** detected by the balanced detector **160.** The output of the sweep linear calibration device **315** is transferred to the signal processor **165.**

The reference arm's **305** second pulsed wavelength-modulated coherent light beam is applied to the second coupler **150.** As described above, the back-reflected coherent light is directed to the coupler **150.** The reference coherent light in the reference arm **305** is coupled with the back-reflected coherent light to form the optical interference signal. The optical interference signal is applied to optical path**155a**, and **155b** is implemented as a free-space path, an optical fiber, or an optical waveguide. The optical interference signal is transferred through the optical paths **155a** and **155b** to be transferred to a balanced photodetector **160** to convert the optical interference signal from the optical paths **155a** and **155b** into an interference electrical signal **162,** as described above.

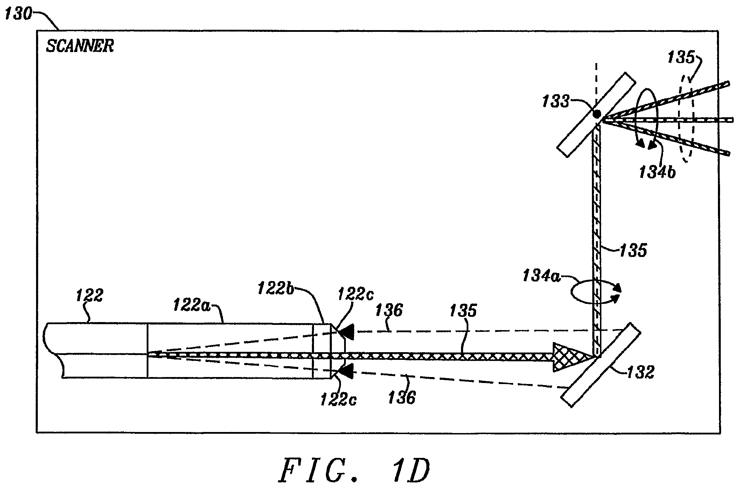

Fig. 1D is a schematic drawing of a scanner **130** configured for receiving the sampling arm **122** having fiber optic cable of Figs. 1A, 1B, and 1C embodying the principles of the present disclosure. The sampling arm **122** is inserted and secured in scanner **130.** The distal end of the sampling arm **122** is connected to or in contact with a graded-index fiber rod **122a.** The graded-index fiber rod **122a** has an engineered graded-index lens 1**22b** that is formed as a distal surface of the graded-index fiber rod **121a** to enhance overall efficiency for high-speed operation. As an alternate example not part of the invention, the engineered graded-index lens 1**22b** is formed as a separate lens in contact with the graded-index fiber rod **121a**. A low numerical aperture is required of the graded-index fiber rod **121a** with an engineered graded-index lens 1**22b** for long-distance illumination, but a higher numerical aperture is required for receiving back-reflected pulsed wavelength-modulated coherent light from the object. The graded-index fiber rod **122a** with an engineered graded-index lens 1**22b** the on-axis sample pulsed wavelength-modulated coherent light **135** light coming out through the center portion of the engineered tip is collimated. The off-axis back-reflected pulsed wavelength-modulated coherent light **136** from the object going through the annular portion **122c** of the engineered graded-index lens 1**22b** is coupled back into the sampling arm **122.** The graded-index fiber rod **122a** with an engineered graded-index lens 1**22b** is implemented as a gradient-index (GRIN) fiberoptic lens with single-mode fiber, a GRIN fiberoptic lens with few-mode fiber, a fiberoptic ball lens, a GRIN lens assembly, or a free-space collimator. Implementing the graded-index fiber rod **122a** with an engineered graded-index lens 1**22b** may combine any of the listed implementations. The engineered graded-index lens 1**22b** is formed of a tapered tip, a Fresnel surface, a meta-surface, or a combination thereof.

The sampling arm **122** is inserted and secured in scanner **130.** It radiates a pulsed wavelength-modulated coherent light **135** to a first mirror **132.** The first mirror **132** is horizontally rotated 1**34a** to reflect the pulsed wavelength-modulated coherent light **135** with a horizontal scan pattern. The horizontal scan pattern covers a desired field of view. The reflected pulsed wavelength-modulated coherent light **135** impinges upon a second mirror **133.** The second mirror **133** is rotated vertically **134b** to create a vertical scan pattern. The vertical scan pattern covers a vertical field of view.

The off-axis back-reflected pulsed wavelength-modulated coherent light **136** is reflected from the desired object to be measured and is back-reflected to the scanner **130** and thus to the second mirror **133** and then to the first mirror **132.** off-axis back-reflected pulsed wavelength-modulated coherent light **136** is reflected and conveyed to the graded-index fiber rod **122a** with an engineered graded-index lens 1**22b** of the sampling arm **122.** The off-axis back-reflected pulsed wavelength-modulated coherent light **136** transferred on an off-axis to the sampling arm **122** having a graded-index fiber rod **122a** with an engineered graded-index lens 1**22b**. The light transfers through the graded-index fiber rod **122a** and is conveyed to the sampling arm **122** to be further processed.

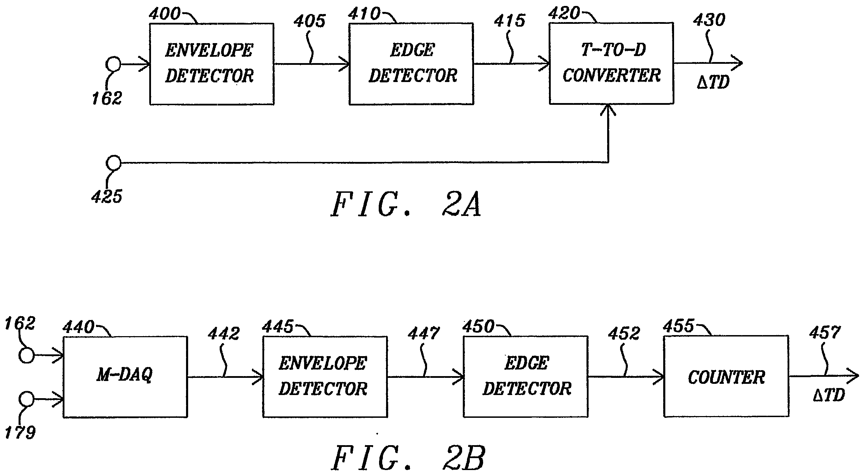

Fig. 2A is a block diagram of an electrical TOI measurement circuit embodying the principles of the present disclosure. The interference electrical signal **162** of Figs. 1A, 1B, and 1C generated from the balanced detector **160** is received by an envelope detector **400** and converted to an envelope **405** of the interference electrical signal **162.** The envelope detector **400** is implemented as a radiofrequency (RF) power detector, a root mean square (RMS) detector, or a frequency demodulator. The radiofrequency (RF) power detector, the root mean square (RMS) detector, or the frequency demodulator are known in the art and are commercially available devices. The radiofrequency (RF) power detector, the root mean square (RMS) detector, or the frequency demodulator remove the high-frequency components in the interference electrical signal **162** and thus identify the envelope of the interference electrical signal **162.**

The envelope signal **405** is transferred to an edge detector **410.** The edge detector **410** determines a pulse event and places the pulse event at the edge detector's output **410.** The pulse event indicates the leading or falling edge of the envelope signal **405.** The edge detector **410** is realized as an edge-to-glitch converter, an XOR gate and delay circuit, a differentiator circuit, or the like. The edge-to-glitch converter, the XOR gate, and delay circuit, the differentiator circuit are similarly known in the art and are commercially available.

The edge detector's output **415** is connected to an input of a time-to-digital converter **420.** The time-to-digital converter **420** generates a time difference signal transferred to the output **430** of the time-to-digital converter **420.** The time difference signal indicates the time between the rising edge or falling edge pulse event **405** and the pulse event **425.** The pulse event **425** corresponds to the rising edge or the falling edge of the light source modulating signal as transferred from the modulation/scanning controller **175.** The pulse event **425** is the trigger for starting the time-to-digital converter **420** in counting the time intervals. The pulse output **415** of the edge detector **410** provides the pulse event for terminating the counting of the time intervals by the time-to-digital converter **420.** A series of time difference signals at the output **430** of the time-to-digital converter **420** is translated into the depth measurements to form images displayed by the computer **170.**

Fig. 2B is a block diagram of a program structure of a signal processor embodying the principles of the present disclosure. The interference electrical signal **162** of Figs. 1A, 1B, and 1C generated from the balanced detector **160** is digitized by a data acquisition module **440.** The data acquisition module **440** is triggered by the modulation/scan synchronization signal **179** from the modulation/scanning controller **175.** The interference electrical signal is converted to a digitized signal **442** and is placed at the output of the data acquisition module **440.** The maximum frequency of the interference electrical signal **162** corresponds to the minimum ranging depth of the TOI LiDAR system **100.** The maximum frequency of the interference electrical signal **162** is greater than a Nyquist sampling frequency of the digitizer of the data acquisition module **440.** The minimum frequency of the interference electrical signal corresponds to the maximum ranging depth of the TOI LiDAR system **100.** The time delay of the detected interference electrical signal **162** is measured at the falling edge of the interference electrical signal's **162** envelope.

The digitized signal **442** is processed by an envelope detector process **445** executed by the signal processor **165** to determine an envelope signal **447** of the digitized interference electrical signal **442.** The envelope detector process **445** is executed by taking the absolute value of a Hilbert transform of the digitized signal **442.** The envelope signal **447** is then processed by an edge detection process **450** to identify the interference electrical signal's occurrence timing. The time difference **457** between the rising edge or the falling edge of the envelope signal **447** and modulation/scan synchronization signal **179** can be calculated.

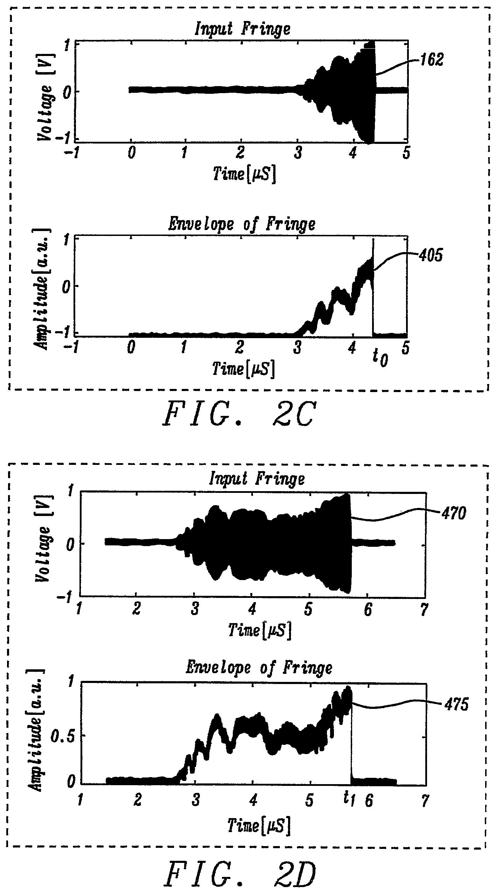

Fig. 2C is a plot of the reference arm's pulse input fringe **460** and envelope **465** embodying the principles of the present disclosure. The plots of Fig. 2C are an example interference electrical signal of the prototype TOI system **100** detecting an object at a zero (0) meter location. Fig. 2D is a plot of the sample arm's back-reflected pulse fringe **470** and envelope **475** embodying the principles of the present disclosure. The plots of Fig. 2D are an example interference electrical signal of the prototype TOI system **100** detecting an object at a 180 m location. The edge detector **410** of Fig 2A or the edge detector process **450** of Fig. 2B determines the time of the falling edge *t₀* of the envelope of the reference arm **460** and the time of the falling edge *t₁* of the envelope of the sample arm **475.** The counter **420** or the counter process **455** counts the time interval between the reference arm's falling edge time *t₀*, and the sample arm's falling edge time *t₁*. The distance from the object being measured is determined by the equation: $Distance = c ∗ \left({t}_{0}-{t}_{1}\right)$ Where:
c is the speed of light.
*t₀* is the reference arm's falling edge time.
*t₁* is the sample arm's falling edge time.
A series of time differences **457** can be translated into the depth information and form images displayed by the computer **170.**

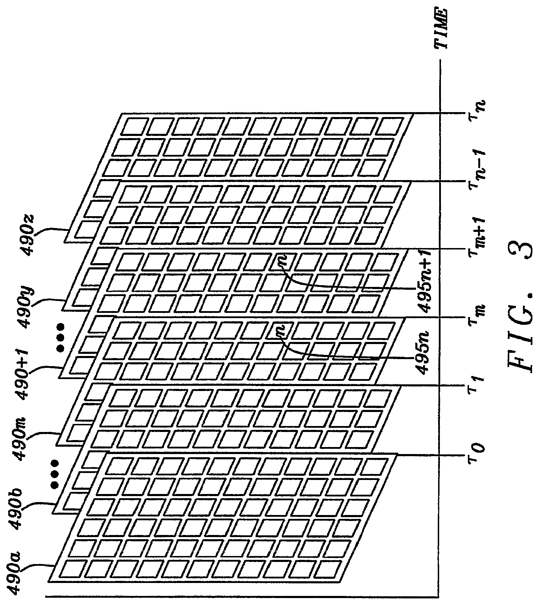

Fig. 3 illustrates the frame-based velocity measurement method of the TOI LiDAR system embodying the principles of the present disclosure. Each frame **490a, 490a, 490b, ..., 490m, 490m+1, ..., 490y, 490z** is captured by the balanced photodetector **160** of Figs. 1A, 1B, and 1C and represents the data **495n** and **495m+1.** The data **495n** and **495m+1** are transferred to the signal processor **165** and processed as described in Figs. 2A and 2B to thus determine the rising edges or falling edges of the data. Therefore, the determination of the data's rising edges or falling edges provides the time difference between the data **495n** and **495n+1.** The distance between the data **495n** and **495n+1** is then determined as the time difference (*tₘ₊₁* - *tₘ*) between the data **495n** and **495n+1.** The time difference (*tₘ₊₁* - *tₘ*) between the data **495n** and **495m+1** is multiplied by the frame rate of the optical interference signal's sampling applied to optical paths **155a** and **155b** to determine the velocity of the object being measured.

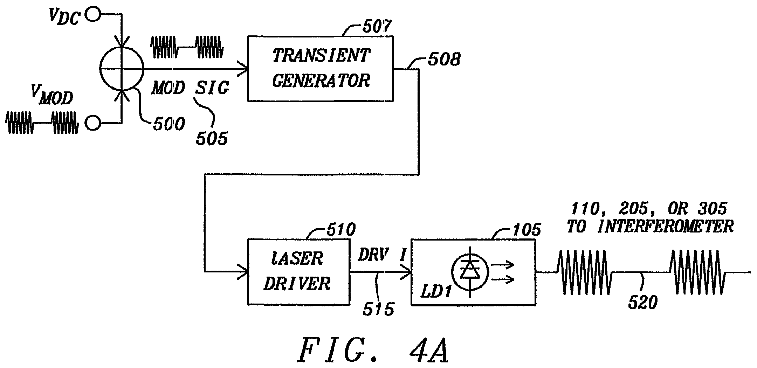

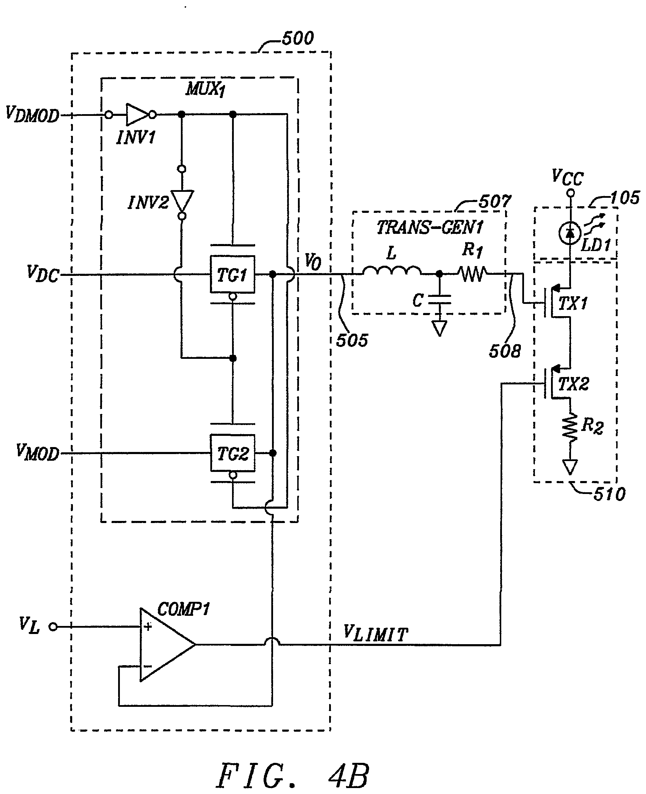

Fig. 4A is a block diagram of a small-signal transient modulator incorporated in the modulation driver of Figs. 1A, 1B, and 1C embodying the principles of this disclosure. The transient light source modulator has a summing circuit **500** connected to receive a DC voltage source **V_{DC}** and a modulating voltage **V_{MOD}.** The summing circuit **500** additively combines the DC voltage source **V_{DC}** and the modulating voltage **V_{MOD}** to form the modulating signal **505.** The modulating signal 505 has an amplitude smaller than the Voltage source **V_{DC}** voltage. The modulating signal **505** is chosen from the group of waveforms, including a square wave, triangular wave, sinusoidal wave, shark's tooth wave, or any arbitrary waveform, and even a combination of the waveforms. A transient generator **507** generates a spiked transient modulating signal **508** by introducing a voltage spike in the modulation signal **505.** The spiked transient modulating signal **508** is applied to the laser driver **510.** The voltage of the spiked transient modulating signal **508** is converted to a current to drive the coherent light source **105.** The function of the transient generator **507** is to alter the effective inductance value of the transient light source modulator to generate a spiked transient current significantly large for reducing the response time of the laser driver **510** and thus overcomes the speed limitation of traditional laser driving methods. The schematic of the transient generator **507** is discussed hereinafter in Fig. 4B. Alternately, the converted current of the modulating signal **505** is applied to a thermoelectric cooling device that is used to stabilize the temperature of the laser diode of the coherent light source **105.** By injecting the modulating current through the thermoelectric cooling device, the temperature of the laser diode of the coherent light source **105** is changed. The laser diodes of the coherent light source **105** have a built-in thermistor for monitoring the diode temperature for permitting the thermoelectric cooling device and the thermistor to form a control loop that provides temperature monitoring and precise temperature modulation.

The coherent light source **105** emits the coherent light signal **520** to the interferometer. The waveform modulation in wavelength/optical frequency is chosen to introduce optical interference where the optical path length difference between the sample arm **122** and reference arms **140** of Fig. 1A, **200** of Fig. 1B, and **305** of Fig. 1C.

Fig. 4B is a schematic of a transient light source modulator and a coherent light source embodying the principles of the present disclosure. The summing circuit **500** has a 2x1 multiplexer **MUX1** that is used to combine a DC voltage source ***V_{DC}*** and an analog modulation signal **V_{AMOD}** that is controlled by a digital modulation signal **V_{DMOD}.** The first input of the 2x1 multiplexer **MUX1** is DC voltage **V_{DC},** providing a lower base voltage. The second input to the 2x1 multiplexer **MUX1** is the modulating voltage **V_{MOD}** which is a higher voltage for forming the output voltage. The 2x1 multiplexer **MUX1** output **V_{O}** provides the transient modulating signal **505,** which is the input of the transient generator **507.** The output of the transient generator **507** is the transient modulation signal **508** that is applied to the input of the laser driver **510.** The Laser Driver **510** converts the transient modulation signal **508** to a current to drive the coherent light source **105.**

The multiplexer **MX1** is formed of two transfer gates **TG1** and **TG2.** The two transfer gates **TG1** and **TG2** are connected in parallel. Each transfer gate of the two transfer gates **TG1** and **TG2,** as is known in the art, has complementary NMOS and PMOS transistors connected. The sources and drains of each of the complementary NMOS and PMOS transistors are connected. The DC voltage source **V_{DC}** and the modulating voltage **V_{MOD}** are connected respectively to the sources transfer gates **TG1** and **TG2.** The digital modulation signal **V_{DMOD}** is connected to an input of a first inverter **INV1.** The output of the first inverter **INV1** is connected to the input of the second inverter **INV2.** The output of the first inverter **INV1** is connected to the out-of-phase gate of the transfer gate **TG1** and to the in-phase gate of the transfer gate **TG2**. The output of the second inverter **INV2** is connected to the out-of-phase gate of the transfer gate **TG2** and to the in-phase gate of the transfer gate **TG1**.

The DC voltage source **V_{DC}** is connected to the input source/drains of the transfer gate **TG1** and a modulating voltage **V_{MOD}** is connected to the input source/drains of the transfer gate **TG2**. The output source/drains of the transfer gate **TG1** and the transfer gate **TG2** are connected to the out-of-phase input of the comparator **COMP1.** The in-phase input of the comparator **COMP1** is connected to a limit voltage source **V_{L}.** The comparator **COMP1** compares the output voltage **V_{O}** of the transfer gates **TG1** and **TG2** with the voltage level of the limit voltage source **V_{L}.** If the voltage level of the limit voltage source **V_{L}** is greater than the output voltage **V_{O}** of the transfer gates **TG1** and **TG2,** the coherent light source **105** is shut down for safety purposes, as described hereinafter.

The 2x1 multiplexer **MX1** has an output voltage **Vₒ** that is applied as the output of the summing circuit **500** to and input of a transient generator **507.** The transient generator **507** has an inductor **L** with a first terminal connected to the output **Vₒ** of the 2x1 multiplexer **MX1.** The second terminal of the inductor L is commonly connected to the first terminal of capacitor **C** and resistor **R₁.** The second terminal of the capacitor **C** is connected to a ground reference source, and the second terminal is connected to the laser driver **510.**

The laser driver **510** has a first NMOS transistor **TX1** with a gate connected to the output of the transient generator **507.** A drain of the MOS transistor **TX1** is connected to the anode of the coherent light source **LD1 105.** The source of the first MOS transistor **TX1** is connected to the drain of the second MOS transistor **TX2.** The source of the second MOS transistor **TX2** is connected to a first terminal of a resistor **R₂.** The gate of the second MOS transistor **TX2** is connected to the output of the comparator **COMP1** for receiving a shutdown command for the coherent light source **LD1 105.** A second terminal of the resistor **R₂** is connected to the ground reference voltage source. The resistor **R₂** established the shutdown voltage for the coherent light source **LD1 105.** The NMOS transistor **TX1** gate is configured as a current source to generate the laser current.

In the embodiment of the parent of the present disclosure, with no transient generator **507,** the gate capacitance of the first MOS transistor **TX1**and the resistance and the inductance on the wires connecting to the first MOS transistor **TX1** have a negligible level of overshoot or spiking with the rise of the modulating signal **505.** The inductance **L,** the large gate size of the first NMOS transistor **TX1,** and capacitor **C** on the wire boost the overshoot to create a current spike or transient signal because of the transition time of the switching of the output **V_{O}** of the 2x1 multiplexer **MX1.** The level of the transient current spike is highly dependent on the rise time of the modulating signal **505** and parameters of the inductance **L,** and the gate size of the first NMOS transistor **TX1.** A positive spike occurs at the rising edge of the first NMOS transistor **TX1 and** the first NMOS transistor **TX1. A** negative spike occurs at the falling edge of the first NMOS transistor **TX1** when switching back to the base voltage level of the DC voltage source **V_{DC}.** Therefore, there are two spike events at every switching of the modulating signal **505.**

The switching pulse width of the modulating signal **505** plays an important role in driving the current source transistor **TX1.** At the rising edge, a current spike immediately occurs and keeps ringing. The current spike then gradually decreases to the charging voltage of the capacitor **C** to a voltage level equal to the amplitude of the modulating signal **505.** At the falling edge of the modulating signal **505,** a negative spike occurs when the 2x1 multiplexer **MX1** is switched to return to the voltage level back to the base voltage level of the DC voltage source **V_{DC}.**

A key aspect is to control the switching pulse width of the modulating signal **505** to merge the positive and negative transient voltage spikes of the transient modulating signal **508.** The merging of the positive and negative transient voltage spikes permits time for the voltage ringing and settling between the two spikes due to multiplexer **MX1** switching on and off. The lesser the time between the positive and negative transient voltage spikes is better for the TOI LiDAR application. The time difference of the positive and negative transient voltage spikes will contribute to the TOI LiDAR range for detection (edge detection), considering if the detected object is very close to the LiDAR device.

The coherent light source **105** is a coherent light source **105.** The coherent light source **105** is a type of laser diode, quantum cascade laser, or optical fiber laser where the device's active region contains a periodically structured element or diffraction grating. The power supply voltage source ***V_{CC}*** is applied to the coherent light source **LD1 105.**

The high and low levels of the digital modulation signal ***V_{DMOD}*** can turn on and off the coherent light source **LD1 105,** respectively. While the digital modulations signal ***V_{DMOD}*** is high, the analog modulation signal ***V_{AMOD}*** can provide a small signal modulation to the light source **105.** The light source **LD1 105** is deactivated when the output of the multiplexer ***V_{O}*** is higher than a pre-defined limiting voltage ***V_{L}*** with a short transition time by the second transistor **TX2.** A protective current limit setting is based on the properties of the NMOS gate **TX2** and the coherent light source **LD1 105** current limit. In this embodiment, the NMOS gate **TX2** has a breakdown voltage at 20V, which is enough for protection. The coherent light source **LD1 105** transient current is high, but this should not be a problem for the coherent light source **LD1 (105** since the transient current has a duration of approximately one nanosecond.

While the digital modulation signal ***V_{DMOD}*** transitions from low to high, the transient generator **507**produces a voltage spike, which switches on the first transistor **TX1** that will immediately drain the current within the light source **LD1,** thus will generate a short transition time for TOI applications.

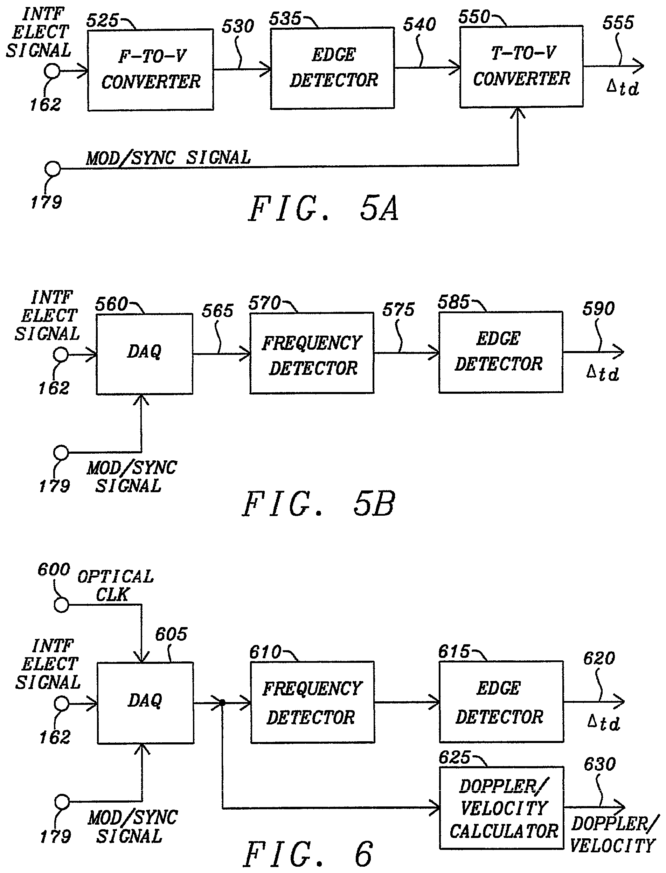

Fig. 5A is a block diagram of an SSM-TOI electrical measurement circuit embodying the principles of the present disclosure. The interference electrical signal **162** generated from the balanced detector **160** is received by a frequency-to-voltage converter **525.** The frequency of the interference electrical signal **162** is converted to a voltage at the output **530** of the frequency-to-voltage converter **525.** The voltage is proportional to the frequency of the interference electrical signal **162.** The frequency-to-voltage converter **525** includes an FM demodulator, a frequency detector, or any frequency-to-voltage converter circuits known in the art. The voltage level at the output **530** is the input to the edge detector **535** that generates a pulse at the output **540** of the edge detector **535.** The pulse corresponds to the rising edge, or the voltage level's rising edge or falling edge at the output **530** of the frequency-to-voltage converter **525.** The edge detector **535** is formed by an edge-to-glitch converter, an XOR gate and delay circuit, a differentiator circuit, or any edge detector circuit known in the art. A time-to-digital converter **550** generates a time difference signal Δ***_{TD}*** at the output **555** of the time-to-digital converter **550.** The time difference signal Δ***_{TD}*** contains the time difference between the rising edge or falling edge pulse at the output **540** of the edge detector **535** and the modulation/scan synchronization signal **179** from the modulation/scanning controller **175.** A series of time differences **507** are translated into the depth to form images displayed by the computer **170.**

Fig. 5B is a block diagram of a program structure of a signal processor **175** configured for performing an SSM-TOI electrical measurement embodying the principles of the present disclosure. The interference electrical signal **162** generated from the balanced detector **160** is digitized by a data acquisition module **605** triggered by modulation/scan synchronization signal **179** from the modulation/scanning controller **175.** The interference electrical signal **162** is converted to a digitized interference signal at the output **565.** The maximum frequency of the interference electrical signal **162** corresponds to the minimum ranging depth of the TOI LiDAR system **100.** The interference electrical signal **162** is greater than a Nyquist sampling frequency of the digitizer in the data acquisition module **605.**

The minimum frequency of the optical interference signal as applied to optical paths **155a** and **155b** corresponds to the maximum ranging depth of the TOI LiDAR system **100.** The time delay of the detected electrical interference **162** is measured at the falling edge of the interference electrical signal's **162** envelope. The interference digitized signal is processed by a frequency detector process **570** to identify its instantaneous frequency value at the output **575** of the frequency detector process **570.** The frequency detector process **570** executes such methods as a short-time Fourier transformation, a wavelet transformation, or another frequency detector process known in the art. The instantaneous frequency value at the output **575** of the frequency detector process **570** is then processed by an edge detector process **585** to identify the occurrence of the timing of the rising edges or falling edges of the interference electrical signal **162,** and the time difference ***Δ_{TD}*** at the output **590** of the edge detector process. The time difference ***Δ_{TD}*** is determined as the time between the rising edge or the falling edge of the instantaneous frequency value at the output **575** and the modulation/scan synchronization signal **179.** A series of time differences ***Δ_{TD}*** are translated into the depth and form images displayed by the computer **170.**

Fig. 6 is a block diagram of a digital signal processor configured for performing an SSM-TOI Doppler velocity measurement embodying the principles of the present disclosure. Fig. 6 illustrates the sweep linearization correction performed by the sweep linearization calibrator **315** of Fig. 1C as utilized in the data acquisition and signal processor **165.** When the TOI LiDAR system **100** operates under SSM-TOI mode, the speed information of the object being measured is encoded in the interference electrical signal **162.** The interference electrical signal **162** as generated by the balanced photodetector **160** is digitized by a data acquisition module **605** triggered by the modulation/scan synchronization signal **179** from the modulating driver **175** and an optical frequency calibration clock **600** to convert the interference electrical signal **162** into a digitized signal at the output **607** of the data acquisition module **605.** The digitized signal is linear in optical frequency space. The maximum frequency of the interference electrical signal **162** corresponds to the minimum ranging depth of the TOI LiDAR system **100.** The interference electrical signal **162** is greater than a Nyquist sampling frequency of the data acquisition module **605.**

The minimum frequency of the interference electrical signal **162** corresponds to the maximum ranging depth of the TOI LiDAR system **100.** The time delay of the detected interference electrical signal **162** is measured at the interference electrical signal **162** envelope's falling edge. The optical frequency calibration clock **600** is generated from a Mach-Zehnder interferometer, a Fabry-Perot cavity, an etalon cavity, or any other interferometer or resonator suitable for generating the optical frequency calibration clock **600.** The digitized signal **607** is an input to a frequency detector process **610** to determine the instantaneous frequency value. The instantaneous frequency value is the solution placed at the output **611** of the frequency detector process **610.** In various embodiments, the optical frequency calibration clock **600** is not required when the digitized signal at the output **607** of the data acquisition module **605** is linear in optical frequency space intrinsically. The frequency detector may be realized in some implementations as a short-time Fourier transformation, wavelet transformation, or other appropriate frequency detector processes. The instantaneous frequency value at the output **611** of the frequency detector process **610** is then processed by an edge detector process **615** to identify the interference's occurrence timing. The edge detector process **615** then calculates the time difference ***Δ_{TD}*** between the rising edge or the falling edge of the instantaneous frequency value and the modulation/scan synchronization signal **179** and then places the time difference ***Δ_{TD}*** placed as the output **620** of the frequency detector process **610.**

In other implementations of the SSM-TOI Doppler velocity measurement, the digitized inference electrical signal at the output **607** of the data acquisition module **605** is the input to a Doppler velocity calculation process **625** to calculate the moving velocity of the target. The moving velocity of the target is the output **630** of the Doppler velocity calculation process **625.** The Doppler velocity calculation process **625** is realized, in one implementation of the Doppler velocity calculation process **625,** by measuring the time difference ***Δ_{TD}*** between the frequency of the interference electrical signal **162** of the consecutive forward and backward sweeps that are proportional to the moving speed of the object being measured. The symmetry of the modulation/scan synchronization signal **179** minimizes the measurement error. A series of time differences ***Δ_{TD}*** at the output of the edge detector **620** and the moving speed of the object being measured can be translated into the depth and the velocity, respectively, and form images displayed by the computer **170.** In some implementations of the SSM-TOI Doppler velocity measurement, the velocity introduced Doppler frequency shift in the interference electrical signal **162** may be directly extracted using at least one low pass filter. The frequency shift can be detected and converted to a velocity electrical signal with no digital signal processing required.

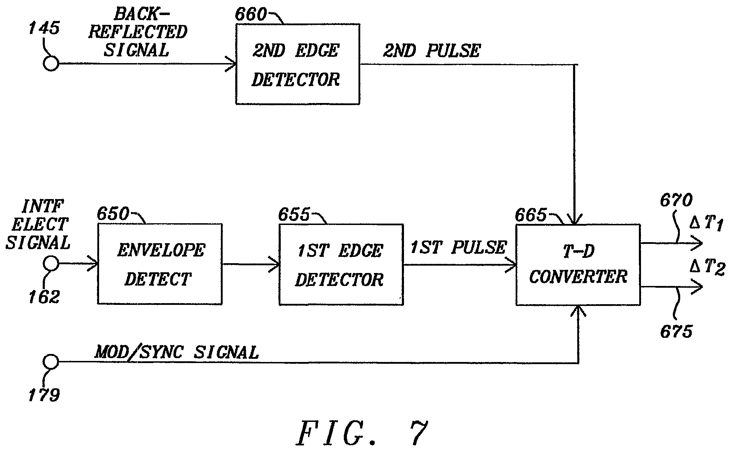

Fig. 7 is a block diagram of an integrated time-of-interference and time-of-flight circuit embodying the principles of the present disclosure. The interference electrical signal **162** generated from the balanced photodetector **160** is transferred to an envelope detector **650.** The envelope detector **650** determines an envelope signal of the interference electrical signal **162** applied to the output **652** of the envelope detector **650.** The envelope detector **650** is implemented as a radiofrequency (RF) power detector, a root mean square (RMS) detector, or a frequency demodulator. The envelope signal of the interference electrical signal **162** is then passed through a first edge detector **655.** The first edge detector **655** generates a first pulse signal at the output **657** of the first edge detector **655** corresponding to the rising edge or the falling edge of the envelope signal of the interference electrical signal **162** at the output **657** of the envelope detector **650.** The edge detector **655** is formed by an edge-to-glitch converter, an XOR gate and delay circuit, a differentiator circuit, or any edge detector circuit known in the art.

An electrical signal from the back-reflected coherent light **145** is extracted from a monitor channel of the balanced detector **160** to form a back-reflected electrical signal **145.** The back-reflected electrical signal **145** from the monitor channel is the back-reflected electrical signal's **145** power spectrum and can be considered an envelope signal. The back-reflected electrical signal **145** is the input of the second edge detector **660.** The second edge detector **660** generates a second pulse signal at the output **662** of the second edge detector **660.**

The first pulse signal at the output **657** of the first edge detector **655,** the second pulse signal at the output **662** of the second edge detector **660,** and the modulation/scan synchronization signal **179** are applied to a multichannel time-to-digital converter **665.** The multichannel time-to-digital converter **665** generates a first time difference signal at the output **670** of the time-to-digital converter **665.** The first time difference signal ***Δ_{TD1}*** is a digitized representation of the time between the rising edge or falling edge of the first pulse signal and modulation/scan synchronization signal **179** corresponding to the rising edge or the falling edge of the light source modulation/scan synchronization signal **179.**

The multichannel time-to-digital converter **665** generates a second time difference signal ***Δ_{TD2}*** between the rising edge or falling edge of the second pulse signal at the output **662** of the second edge detector **660** and the modulation/scan synchronization signal **179** corresponding to the rising edge or the falling edge of the light source modulation. The first time difference signal ***Δ_{TD1}*** and the second time difference signal ***Δ_{TD2}*** are averaged or weighted average. The averaged or weighted averaged first time difference signal ***Δ_{TD1}*** and the second time difference signal ***Δ_{TD2}*** are translated into the depth and form images displayed by the computer **170.**

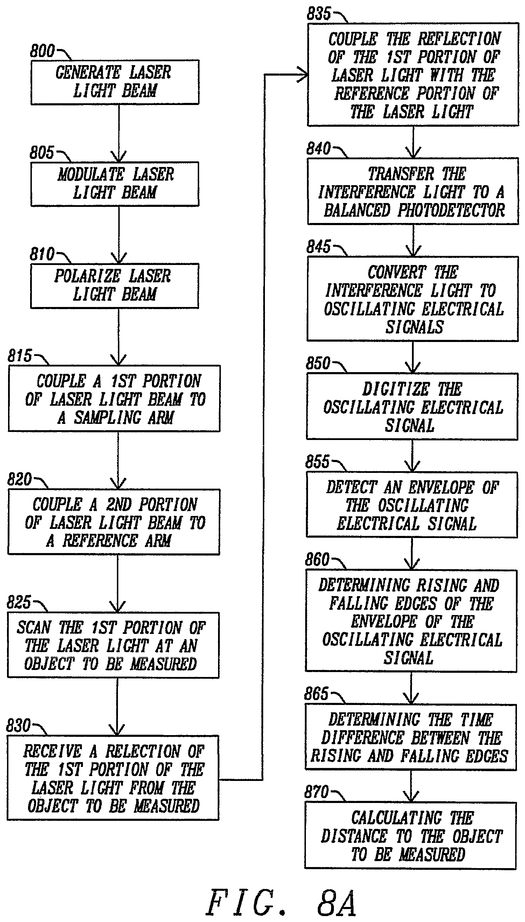

Fig. 8A is a flowchart of a method for determining an object's distance employing SSM-TOI electrical measurement embodying the principles of the present disclosure. A laser light beam is generated (Box **800**). The laser light beam is modulated (Box **805**) with a wavelength-modulated or frequency-modulated signal to adjust the laser light beam's wavelength or frequency. The laser light beam is then polarized (Box **810**) to adjust the laser light's polarization states to maximize the amplitude of the optical interference signal or interference electrical signal.

The first portion of the laser light beam is coupled (Box **815**) to a sampling fiberoptic cable. A second portion of the laser light beam is coupled (Box **820**) to a reference optical path. The first portion of the laser light beam is scanned (Box **825**) at an object whose distance from the modulated laser light source is determined.

A fractional part of the first portion of the laser coherent light beam is back-reflected and received (Box **830**) from the object to be measured. The back-reflected portion of the first portion of the laser light beam is coupled (Box **835**) with the second portion of the laser light beam to form the optical interference coherent light signal. The optical interference coherent light signal is transmitted (Box **840**) to a balanced optical photodetector to convert (Box **845**) the optical interference coherent light signal to an oscillating electrical interference signal. The oscillating electrical interference signal is digitized (Box **850**). The maximum frequency of the interference electrical signal corresponds to the minimum ranging depth of the TOI LiDAR system and is greater than a Nyquist sampling frequency of the digitization. The minimum frequency of the interference electrical signal **162** corresponds to the maximum ranging depth of the TOI LiDAR system **100.**

The digitized electrical interference signal envelope undergoes an envelope detection process to identify (Box **855**) the envelope of the digitized electrical interference signal. The times of the rising or the falling edges of the envelope rising or falling edges of the envelope of the digitized electrical interference signal are determined (Box **860** ). The time difference between the rising or falling edges of the envelope of the digitized electrical interference signal and a modulation/scan synchronization signal is determined (Box **865**), and the distance to the object to be measured is calculated (Box **870**).

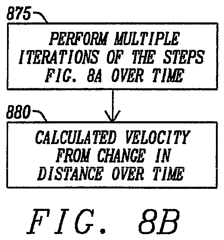

Fig. 8B is a flowchart of a method for determining an object's velocity employing SSM-TOI electrical measurement embodying the principles of the present disclosure. The method for determining an object's velocity utilizing SSM-TOI electrical measurement begins with performing (Box **875**) the steps of the method of Fig.8A iteratively. The object's velocity is determined (Box **880**) as the change in distance over time.

While this disclosure has been particularly shown and described with reference to the preferred embodiments thereof, it will be understood by those skilled in the art that various changes in form and details may be made. Particularly, the TOI LiDAR system **100** of Fig. 1A, Fig. 1B, or Fig. 1C may be implemented as fiber optics, bulk optics, integrated photonic circuitry, or any cornbination of optical photonic devices known in the art.

## Claims

1. A high-speed time-of-interference (Tol) detection and ranging (LiDAR) system for measuring the distance from the Tol LiDAR system to an object based on time-frequency domain reflectometry, comprising:
a coherent light source (105);
a modulating controller (115) connected to the coherent light source and configured for generating and controlling a pulse width of a pulsed wavelength control signal that is transferred to the coherent light source for modulating the coherent light source to generate a pulsed wavelength-modulated coherent light emission,;
an interferometer (110) connected with the coherent light source for receiving the pulsed wavelength-modulated coherent light emission and configured for partitioning the pulsed wavelength-modulated coherent light emission into a sample portion (122) and a reference portion (140), wherein the sample portion of the pulsed wavelength-modulated coherent light emission is arranged to impinge upon the object to be measured, and the reference portion of the pulsed wavelength-modulated coherent light emission is arranged to provide a basis for determining the distance from the TOI LiDAR system to the object;
a scanner (130) configured to physically transfer the pulsed wavelength-modulated coherent light's sample portion to the object and to scan the surface of the object with the pulsed wavelength-modulated coherent light, and the scanner is further configured to receive a back-reflected portion of the pulsed wavelength-modulated coherent light and transfer the back-reflected portion from the scanner to the interferometer;
wherein the back-reflected portion of the pulsed wavelength modulated coherent light is coupled with the reference portion of the pulsed wavelength-modulated coherent light to form an optical interference light signal;
a photodetector array (160) configured to receive the optical interference light signal and convert the optical interference signal to an electrical interference signal;
a signal processor (165) in communication with the photodetector array to receive the electrical interference signal and convert the electrical interference signal to convert it to a digitized electrical interference signal; and
a computer system (170) configured programmed to calculate the time delay determined by the optical interference signal and generate a displayed imaging range based on the distance from the target;
**characterized in that** :
said modulating controller (115) comprises a transient generator (507) generating a spiked transient modulating signal (508) to be converted to a current to drive said coherent light source, said transient generator (507) generating a positive transient voltage spike and a negative transient voltage spike and controlling said transient modulating signal (508) to merge the positive transient voltage spike and the negative transient voltage spike for permitting time for voltage ringing and settling between the two spikes;
said scanner (130) comprises a graded-index fiber rod having an engineered graded-index lens (121b) that is formed as a distal surface of the graded-index fiber rod (121a) to provide a first low numerical aperture for emission and a second higher numerical aperture for receiving connected to the interferometer to receive the sample portion of the pulsed wavelength-modulated coherent light.

2. The time-of-interference LiDAR system of claim 1 wherein the modulating controller with the transient generator is configured to modulate the coherent light source by controlling the coherent light source's driving current, adjusting the temperature of the narrow bandwidth light source, or adjusting the phase of the light emitted from the light source, wherein the transient generator comprises an inductance, a capacitance, and a resistance configured for generating the positive transient voltage spike and the negative transient voltage spike.

3. The time-of-interference LiDAR system of claim 1 wherein the interferometer comprises:
a first coupler configured to receive the pulsed wavelength-modulated coherent light from the coherent light source and configured to divide the pulsed wavelength-modulated coherent light into a first portion of the pulsed wavelength-modulated coherent light and a second portion of the pulsed wavelength-modulated coherent light;
a circulator connected to receive the first portion of the pulsed wavelength-modulated coherent light and configured such that the first portion of the pulsed wavelength-modulated coherent light enters a first port of the circulator and exits from the subsequent port to direct the first portion of the pulsed wavelength-modulated coherent light to the scanner;
a sample arm connected to the first coupler to receive the first portion of the pulsed wavelength-modulated coherent light and transfer the first portion of the pulsed wavelength-modulated coherent light to the scanner;
a reference arm connected to the first coupler to receive the second portion of the pulsed wavelength-modulated coherent light; and
a second coupler configured to receive the back-reflected portion of the pulsed wavelength modulated coherent light, configured to receive the second portion of the pulsed wavelength modulated coherent light from the reference arm, and configured to couple the back-reflected portion of the pulsed wavelength modulated coherent light and the second portion of the pulsed wavelength modulated coherent light to form an optical interference light signal.

4. The time-of-interference LiDAR system of claim 3 wherein the interferometer further comprises:
a polarization controller configured to receive the pulsed wavelength-modulated coherent light emission, transfer the pulsed wavelength-modulated coherent light emission to the first coupler, and configured to adjust the polarization states of the coherent light emission from the light source and maximize the amplitude of the optical interference signal or interference electrical signal.

5. The time-of-interference LiDAR system of claim 1 wherein the photodetector array is configured as a polarization-diversity balanced amplified detector and comprises at least one power monitor to measure the input power level to the photodetector array, wherein the power monitor output provides a modulated power level with a time delay associated with the object's distance.

6. The time-of-interference LiDAR system of claim 3 wherein the reference arm has a length greater than the sample arm's length, and the reference arm's optical path length is more than two times the system's maximum ranging depth.

7. The time-of-interference LiDAR system of claim 1 wherein the maximum frequency of the optical interference signal corresponds to the system's minimum ranging depth.

8. The time-of-interference LiDAR system of claim 1 wherein the signal processor is configured for determining an envelope of a digitized electrical interference signal.

9. The time-of-interference LiDAR system of claim 8 wherein the signal processor is configured to measure a time delay of the digitized electrical interference signal at a falling edge of the envelope of the digitized electrical interference signal.

10. The time-of-interference LiDAR system of claim 1 further comprises a scan controller configured to create the scan pattern that generates a scan synchronization signal and configured to apply the scan synchronization signal to the scanner to generate scan patterns that achieve the collection of the measurement information describing the object.

11. The time-of-interference LiDAR system of claim 1 wherein the time-of-interference LiDAR system is implemented as fiberoptics, bulk optics, integrated photonic circuitry, or any combination of optical photonic devices.

12. The time-of-interference LiDAR system of claim 1 wherein the transient generator alters the effective inductance value of the transient light source modulator to generate a spiked transient for significantly reducing the response time of the laser driver (510) and thus overcoming any speed limitation.

## Patentansprüche

1. Hochgeschwindigkeits-Time-of-Interference-(ToI)-LiDAR-System zum Messen des Abstands von dem ToI-LiDAR-System zu einem Objekt auf der Grundlage von Zeit-Frequenzbereichs-Reflektometrie, umfassend:
eine kohärente Lichtquelle (105);
eine mit der kohärenten Lichtquelle verbundene Modulationssteuerung (115), die dazu eingerichtet ist, eine Impulsbreite eines gepulsten Wellenlängensteuersignals zu erzeugen und zu steuern, das an die kohärente Lichtquelle übertragen wird, um die kohärente Lichtquelle derart zu modulieren, dass eine gepulste, wellenlängenmodulierte kohärente Lichtemission erzeugt wird;
ein mit der kohärenten Lichtquelle verbundenes Interferometer (110) zum Empfangen der gepulsten, wellenlängenmodulierten kohärenten Lichtemission, das dazu eingerichtet ist, die gepulste, wellenlängenmodulierte kohärente Lichtemission in einen Messanteil (122) und einen Referenzanteil (140) aufzuteilen, wobei der Messanteil der gepulsten, wellenlängenmodulierten kohärenten Lichtemission so angeordnet ist, dass er auf das zu messende Objekt auftrifft, und der Referenzanteil der gepulsten, wellenlängenmodulierten kohärenten Lichtemission so angeordnet ist, dass er eine Grundlage zur Bestimmung des Abstands von dem ToI-LiDAR-System zu dem Objekt bereitstellt;
einen Scanner (130), der dazu eingerichtet ist, den Messanteil des gepulsten, wellenlängenmodulierten kohärenten Lichts physisch zu dem Objekt zu übertragen und die Oberfläche des Objekts mit dem gepulsten, wellenlängenmodulierten kohärenten Licht abzutasten, wobei der Scanner ferner dazu eingerichtet ist, einen rückreflektierten Anteil des gepulsten, wellenlängenmodulierten kohärenten Lichts zu empfangen und den rückreflektierten Anteil von dem Scanner zu dem Interferometer zu übertragen;
wobei der rückreflektierte Anteil des gepulsten, wellenlängenmodulierten kohärenten Lichts mit dem Referenzanteil des gepulsten, wellenlängenmodulierten kohärenten Lichts gekoppelt wird, um ein optisches Interferenzlichtsignal zu bilden;
eine Photodetektoranordnung (160), die dazu eingerichtet ist, das optische Interferenzlichtsignal zu empfangen und das optische Interferenzsignal in ein elektrisches Interferenzsignal umzuwandeln;
einen Signalprozessor (165), der mit der Photodetektoranordnung in Kommunikation steht, um das elektrische Interferenzsignal zu empfangen und das elektrische Interferenzsignal in ein digitalisiertes elektrisches Interferenzsignal umzuwandeln; und
ein Computersystem (170), das dazu programmiert und eingerichtet ist, die durch das optische Interferenzsignal bestimmte Zeitverzögerung zu berechnen und auf der Grundlage des Abstands zu dem Ziel eine bildliche Entfernungsdarstellung zu erzeugen;
**dadurch gekennzeichnet, dass**:
die Modulationssteuerung (115) einen Transientengenerator (507) umfasst, der ein spitzenförmiges transientes Modulationssignal (508) erzeugt, das in einen Strom zum Ansteuern der kohärenten Lichtquelle umzuwandeln ist, wobei der Transientengenerator (507) eine positive transiente Spannungsspitze und eine negative transiente Spannungsspitze erzeugt und das transiente Modulationssignal (508) derart steuert, dass die positive transiente Spannungsspitze und die negative transiente Spannungsspitze zusammengeführt werden, um zwischen den beiden Spitzen Zeit für Spannungsnachschwingen und Einschwingen zu ermöglichen;
der Scanner (130) einen Faserstab mit Gradientenindex umfasst, der eine speziell ausgelegte Gradientenindexlinse (121b) aufweist, die als distale Oberfläche des Gradientenindex-Faserstabs (121a) ausgebildet ist, um eine erste niedrige numerische Apertur für die Emission und eine zweite, höhere numerische Apertur für den Empfang bereitzustellen, wobei der Gradientenindex-Faserstab mit dem Interferometer verbunden ist, um den Messanteil des gepulsten, wellenlängenmodulierten kohärenten Lichts zu empfangen.

2. Time-of-Interference-LiDAR-System nach Anspruch 1, wobei die Modulationssteuerung mit dem Transientengenerator dazu eingerichtet ist, die kohärente Lichtquelle zu modulieren, indem der Ansteuerstrom der kohärenten Lichtquelle gesteuert, die Temperatur der schmalbandigen Lichtquelle eingestellt oder die Phase des von der Lichtquelle emittierten Lichts eingestellt wird,
wobei der Transientengenerator eine Induktivität, eine Kapazität und einen Widerstand umfasst, die dazu eingerichtet sind, die positive transiente Spannungsspitze und die negative transiente Spannungsspitze zu erzeugen.

3. Time-of-Interference-LiDAR-System nach Anspruch 1, wobei das Interferometer umfasst:
einen ersten Koppler, der dazu eingerichtet ist, das gepulste, wellenlängenmodulierte kohärente Licht von der kohärenten Lichtquelle zu empfangen, und dazu eingerichtet ist, das gepulste, wellenlängenmodulierte kohärente Licht in einen ersten Anteil des gepulsten, wellenlängenmodulierten kohärenten Lichts und einen zweiten Anteil des gepulsten, wellenlängenmodulierten kohärenten Lichts aufzuteilen;
einen Zirkulator, der zum Empfangen des ersten Anteils des gepulsten, wellenlängenmodulierten kohärenten Lichts angeschlossen und derart eingerichtet ist, dass der erste Anteil des gepulsten, wellenlängenmodulierten kohärenten Lichts in einen ersten Anschluss des Zirkulators eintritt und aus dem nachfolgenden Anschluss austritt, um den ersten Anteil des gepulsten, wellenlängenmodulierten kohärenten Lichts zu dem Scanner zu leiten;
einen Messarm, der mit dem ersten Koppler verbunden ist, um den ersten Anteil des gepulsten, wellenlängenmodulierten kohärenten Lichts zu empfangen und den ersten Anteil des gepulsten, wellenlängenmodulierten kohärenten Lichts zu dem Scanner zu übertragen;
einen Referenzarm, der mit dem ersten Koppler verbunden ist, um den zweiten Anteil des gepulsten, wellenlängenmodulierten kohärenten Lichts zu empfangen; und
einen zweiten Koppler, der dazu eingerichtet ist, den rückreflektierten Anteil des gepulsten, wellenlängenmodulierten kohärenten Lichts zu empfangen, den zweiten Anteil des gepulsten, wellenlängenmodulierten kohärenten Lichts von dem Referenzarm zu empfangen und den rückreflektierten Anteil des gepulsten, wellenlängenmodulierten kohärenten Lichts und den zweiten Anteil des gepulsten, wellenlängenmodulierten kohärenten Lichts miteinander zu koppeln, um ein optisches Interferenzlichtsignal zu bilden.

4. Time-of-Interference-LiDAR-System nach Anspruch 3, wobei das Interferometer ferner umfasst:
einen Polarisationsregler, der dazu eingerichtet ist, die gepulste, wellenlängenmodulierte kohärente Lichtemission zu empfangen, die gepulste, wellenlängenmodulierte kohärente Lichtemission an den ersten Koppler zu übertragen und die Polarisationszustände der kohärenten Lichtemission von der Lichtquelle einzustellen und die Amplitude des optischen Interferenzsignals oder des elektrischen Interferenzsignals zu maximieren.

5. Time-of-Interference-LiDAR-System nach Anspruch 1, wobei die Photodetektoranordnung als ein verstärkter symmetrischer Detektor mit Polarisationsdiversität ausgebildet ist und mindestens einen Leistungsmonitor zum Messen des Eingangsleistungspegels an der Photodetektoranordnung umfasst,
wobei der Ausgang des Leistungsmonitors einen modulierten Leistungspegel mit einer mit dem Abstand des Objekts verbundenen Zeitverzögerung bereitstellt.

6. Time-of-Interference-LiDAR-System nach Anspruch 3, wobei der Referenzarm eine größere Länge als der Messarm aufweist und die optische Weglänge des Referenzarms mehr als das Zweifache der maximalen Entfernungsmessungstiefe des Systems beträgt.

7. Time-of-Interference-LiDAR-System nach Anspruch 1, wobei die maximale Frequenz des optischen Interferenzsignals der minimalen Entfernungsmessungstiefe des Systems entspricht.

8. Time-of-Interference-LiDAR-System nach Anspruch 1, wobei der Signalprozessor dazu eingerichtet ist, eine Hüllkurve eines digitalisierten elektrischen Interferenzsignals zu bestimmen.

9. Time-of-Interference-LiDAR-System nach Anspruch 8, wobei der Signalprozessor dazu eingerichtet ist, eine Zeitverzögerung des digitalisierten elektrischen Interferenzsignals an einer fallenden Flanke der Hüllkurve des digitalisierten elektrischen Interferenzsignals zu messen.

10. Time-of-Interference-LiDAR-System nach Anspruch 1, ferner umfassend eine Abtaststeuerung, die dazu eingerichtet ist, das Abtastmuster zu erzeugen, welches ein Abtastsynchronisationssignal erzeugt, und dazu eingerichtet ist, das Abtastsynchronisationssignal an den Scanner anzulegen, um Abtastmuster zu erzeugen, durch welche die Erfassung von Messinformationen, die das Objekt beschreiben, ermöglicht wird.

11. Time-of-Interference-LiDAR-System nach Anspruch 1, wobei das Time-of-Interference-LiDAR-System mittels Faseroptik, Freistrahloptik, integrierter photonischer Schaltungen oder einer beliebigen Kombination optisch-photonischer Vorrichtungen realisiert ist.

12. Time-of-Interference-LiDAR-System nach Anspruch 1, wobei der Transientengenerator den effektiven Induktivitätswert des transienten Lichtquellenmodulators verändert, um einen spitzenförmigen Transienten zu erzeugen, wodurch die Ansprechzeit des Lasertreibers (510) erheblich verkürzt und somit eine etwaige Geschwindigkeitsbegrenzung überwunden wird.

## Revendications

1. Système de détection et de télémétrie LiDAR à temps d'interférence (ToI) à grande vitesse destiné à mesurer la distance entre le système LiDAR ToI et un objet sur la base d'une réflectométrie dans le domaine temps-fréquence, comprenant :
une source de lumière cohérente (105) ;
un contrôleur de modulation (115) connecté à la source de lumière cohérente et configuré pour générer et commander une largeur d'impulsion d'un signal de commande de longueur d'onde pulsé qui est transmis à la source de lumière cohérente afin de moduler ladite source de lumière cohérente pour générer une émission de lumière cohérente modulée en longueur d'onde et pulsée ;
un interféromètre (110) connecté à la source de lumière cohérente pour recevoir l'émission de lumière cohérente modulée en longueur d'onde et pulsée, et configuré pour diviser ladite émission de lumière cohérente modulée en longueur d'onde et pulsée en une partie d'échantillonnage (122) et une partie de référence (140), dans lequel la partie d'échantillonnage de l'émission de lumière cohérente modulée en longueur d'onde et pulsée est agencée pour venir frapper l'objet à mesurer, et la partie de référence de l'émission de lumière cohérente modulée en longueur d'onde et pulsée est agencée pour fournir une base permettant de déterminer la distance entre le système LiDAR ToI et l'objet ;
un scanner (130) configuré pour transférer physiquement jusqu'à l'objet la partie d'échantillonnage de la lumière cohérente modulée en longueur d'onde et pulsée et pour balayer la surface de l'objet avec ladite lumière cohérente modulée en longueur d'onde et pulsée, le scanner étant en outre configuré pour recevoir une partie rétroréfléchie de la lumière cohérente modulée en longueur d'onde et pulsée et transférer ladite partie rétroréfléchie du scanner à l'interféromètre ;
dans lequel la partie rétroréfléchie de la lumière cohérente modulée en longueur d'onde et pulsée est couplée à la partie de référence de la lumière cohérente modulée en longueur d'onde et pulsée afin de former un signal lumineux d'interférence optique ;
un réseau de photodétecteurs (160) configuré pour recevoir le signal lumineux d'interférence optique et convertir le signal d'interférence optique en un signal électrique d'interférence ;
un processeur de signal (165) en communication avec le réseau de photodétecteurs pour recevoir le signal électrique d'interférence et convertir ledit signal électrique d'interférence en un signal électrique d'interférence numérisé ; et
un système informatique (170) programmé et configuré pour calculer le retard temporel déterminé par le signal d'interférence optique et générer un affichage d'imagerie de distance sur la base de la distance par rapport à la cible ;
**caractérisé en ce que** :
ledit contrôleur de modulation (115) comprend un générateur de transitoires (507) générant un signal de modulation transitoire à pics (508) destiné à être converti en un courant pour piloter ladite source de lumière cohérente, ledit générateur de transitoires (507) générant un pic transitoire de tension positive et un pic transitoire de tension négative et commandant ledit signal de modulation transitoire (508) de manière à combiner le pic transitoire de tension positive et le pic transitoire de tension négative afin de ménager un temps permettant les oscillations transitoires de tension et leur stabilisation entre les deux pics ;
ledit scanner (130) comprend une tige de fibre à gradient d'indice comportant une lentille à gradient d'indice conçue à cet effet (121b), formée en tant que surface distale de la tige de fibre à gradient d'indice (121a), afin de fournir une première faible ouverture numérique pour l'émission et une seconde ouverture numérique, plus élevée, pour la réception, ladite tige étant connectée à l'interféromètre afin de recevoir la partie d'échantillonnage de la lumière cohérente modulée en longueur d'onde et pulsée.

2. Système LiDAR à temps d'interférence selon la revendication 1, dans lequel le contrôleur de modulation comprenant le générateur de transitoires est configuré pour moduler la source de lumière cohérente en commandant le courant de pilotage de la source de lumière cohérente, en ajustant la température de la source lumineuse à bande passante étroite, ou en ajustant la phase de la lumière émise par la source lumineuse,
dans lequel le générateur de transitoires comprend une inductance, une capacité et une résistance configurées pour générer le pic transitoire de tension positive et le pic transitoire de tension négative.

3. Système LiDAR à temps d'interférence selon la revendication 1, dans lequel l'interféromètre comprend :
un premier coupleur configuré pour recevoir la lumière cohérente modulée en longueur d'onde et pulsée provenant de la source de lumière cohérente et configuré pour diviser ladite lumière cohérente modulée en longueur d'onde et pulsée en une première partie de la lumière cohérente modulée en longueur d'onde et pulsée et une seconde partie de la lumière cohérente modulée en longueur d'onde et pulsée ;
un circulateur connecté de manière à recevoir la première partie de la lumière cohérente modulée en longueur d'onde et pulsée et configuré de telle sorte que la première partie de la lumière cohérente modulée en longueur d'onde et pulsée entre dans un premier port du circulateur et sorte par le port suivant, afin de diriger la première partie de la lumière cohérente modulée en longueur d'onde et pulsée vers le scanner ;
un bras de mesure connecté au premier coupleur pour recevoir la première partie de la lumière cohérente modulée en longueur d'onde et pulsée et transférer ladite première partie de la lumière cohérente modulée en longueur d'onde et pulsée vers le scanner ;
un bras de référence connecté au premier coupleur pour recevoir la seconde partie de la lumière cohérente modulée en longueur d'onde et pulsée ; et
un second coupleur configuré pour recevoir la partie rétroréfléchie de la lumière cohérente modulée en longueur d'onde et pulsée, configuré pour recevoir, en provenance du bras de référence, la seconde partie de la lumière cohérente modulée en longueur d'onde et pulsée, et configuré pour coupler la partie rétroréfléchie de la lumière cohérente modulée en longueur d'onde et pulsée avec la seconde partie de la lumière cohérente modulée en longueur d'onde et pulsée afin de former un signal lumineux d'interférence optique.

4. Système LiDAR à temps d'interférence selon la revendication 3, dans lequel l'interféromètre comprend en outre :
un contrôleur de polarisation configuré pour recevoir l'émission de lumière cohérente modulée en longueur d'onde et pulsée, pour transférer ladite émission de lumière cohérente modulée en longueur d'onde et pulsée au premier coupleur, et configuré pour ajuster les états de polarisation de l'émission de lumière cohérente provenant de la source lumineuse et maximiser l'amplitude du signal d'interférence optique ou du signal électrique d'interférence.

5. Système LiDAR à temps d'interférence selon la revendication 1, dans lequel le réseau de photodétecteurs est configuré sous la forme d'un détecteur amplifié équilibré à diversité de polarisation et comprend au moins un moniteur de puissance destiné à mesurer le niveau de puissance d'entrée du réseau de photodétecteurs,
dans lequel la sortie du moniteur de puissance fournit un niveau de puissance modulé présentant un retard temporel associé à la distance de l'objet.

6. Système LiDAR à temps d'interférence selon la revendication 3, dans lequel le bras de référence présente une longueur supérieure à celle du bras de mesure, et la longueur du trajet optique du bras de référence est supérieure à deux fois la profondeur maximale de mesure de distance du système.

7. Système LiDAR à temps d'interférence selon la revendication 1, dans lequel la fréquence maximale du signal d'interférence optique correspond à la profondeur minimale de mesure de distance du système.

8. Système LiDAR à temps d'interférence selon la revendication 1, dans lequel le processeur de signal est configuré pour déterminer une enveloppe d'un signal électrique d'interférence numérisé.

9. Système LiDAR à temps d'interférence selon la revendication 8, dans lequel le processeur de signal est configuré pour mesurer un retard temporel du signal électrique d'interférence numérisé au niveau d'un front descendant de l'enveloppe du signal électrique d'interférence numérisé.

10. Système LiDAR à temps d'interférence selon la revendication 1, comprenant en outre un contrôleur de balayage configuré pour créer le motif de balayage qui génère un signal de synchronisation de balayage, et configuré pour appliquer le signal de synchronisation de balayage au scanner afin de générer des motifs de balayage permettant de recueillir les informations de mesure décrivant l'objet.

11. Système LiDAR à temps d'interférence selon la revendication 1, dans lequel le système LiDAR à temps d'interférence est réalisé sous la forme de composants à fibres optiques, de composants optiques en espace libre, de circuits photoniques intégrés, ou de toute combinaison de dispositifs photoniques optiques.

12. Système LiDAR à temps d'interférence selon la revendication 1, dans lequel le générateur de transitoires modifie la valeur d'inductance effective du modulateur transitoire de la source lumineuse afin de générer un transitoire en forme de pic permettant de réduire de manière significative le temps de réponse du circuit de commande du laser (510) et ainsi de surmonter toute limitation de vitesse.
